# EUROPÄISCHE PATENTSCHRIFT

(11) **EP 2 566 028 B1**
(45) Veröffentlichungstag und Bekanntmachung des Hinweises auf die Patenterteilung: **09.07.2014**
(21) Anmeldenummer: 11180065.2
(22) Anmeldetag: 05.09.2011
(51) Int. Cl.: H02M 3/335

(54) **Schaltungsanordnung und Verfahren zur induktiven Energieübertragung**
Switching assembly and method for inductive energy transfer
Agencement de commutation et procédé de transmission d'énergie inductive

(43) Veröffentlichungstag der Anmeldung: 06.03.2013
(73) Patentinhaber: RRC power solutions GmbH, 66424 Homburg/Saar (DE)
(72) Erfinder: Huwig, Dominik, 66839 Schmelz (DE); Wambsganß, Peter, 66450 Bexbach (DE)
(74) Vertreter: Hofstetter, Schurack & Partner

(56) Entgegenhaltungen:
- WO-A1-2009/081115
- US-A1- 2004 218 406

## Beschreibung

Die vorliegende Erfindung betrifft eine Schaltungsanordnung zur induktiven Energieübertragung gemäß dem Oberbegriff des Anspruchs 1. Aus dem Stand der Technik ist eine derartige Schaltungsanordnung aus der US 2004/0218406 A1 bekannt. Sie betrifft überdies ein entsprechendes Verfahren zur induktiven Energieübertragung gemäß dem Oberbegriff des Anspruchs 16.

Eine Brückenschaltung ist eine Ausführungsform eines Schaltreglers. Die Verlustleistung in einem Schaltregler setzt sich zusammen aus Leitungs- und Schaltverlusten. Leitungsverluste werden durch die Verlustwiderstände der verwendeten Bauteile und Verbindungen verursacht. Sie steigen quadratisch mit dem Strom durch die verlustbehafteten Schaltungselemente. In der Regel nehmen diese Ströme mit abnehmender Ausgangsleistung ab, mit der Folge, dass, insbesondere bei geringer Ausgangslast, der Anteil der Leitungsverluste an den Gesamtverlusten gering ist. Schaltverluste setzen sich in einer getakteten Stromversorgung zusammen aus Ummagnetisierungsverlusten, dielektrischen Verlusten, Wirbelstromverlusten, Ansteuerungsverlusten und Verlusten aufgrund des nicht idealen Schaltverhaltens von Halbleiterbauelementen. Die Schaltverluste hängen stark von der Schaltfrequenz ab und nehmen mit sinkender Ausgangsleistung nur langsam ab.

Zur Wirkungsgradsteigerung bei mittlerer und kleiner Ausgangsleistung wird in getakteten Stromversorgungen vielfach der Puls-Pause-Betrieb, der so genannte Burst-Mode, vorgesehen. Die Ansteuersignale der Leistungsstufe werden dabei während einer Pausedauer deaktiviert, so dass in dieser Zeitspanne keine Verluste bei der Energiewandlung entstehen. Während einer Pulsphase ist die von der Quelle zur Last übertragene Leistung höher als die Ausgangsleistung, wodurch das Verhältnis von Verlustleistung zu Ausgangsleistung kleiner wird. Dies ist beispielsweise der Fall, wenn der Verbraucher im Stand-by-Betrieb betrieben wird, bei dem die am Ausgang entnommene Leistung sehr klein ist, während die Verlustleistung nach wie vor, unabhängig von der entnommenen Leistung, konstant ist. In der Pausephase findet keine Leistungsübertragung statt. Das Verhältnis der Pulsdauer zur Pausedauer wird durch einen Controller so eingestellt, dass die mittlere übertragene Leistung gleich der abgenommenen Leistung ist.

Während der Pulsphase wird mit hoher Effizienz mehr Leistung übertragen als am Ausgang benötigt wird. Durch die sich daran anschließende Pausephase wird sichergestellt, dass die mittlere Leistung der am Ausgang benötigten Leistung entspricht.

Im Puls-Pause-Betrieb wird die Ausgangsgröße mit Hilfe eines Hysteresereglers innerhalb eines vorgegebenen Toleranzfensters gehalten. Die Pulsphase wird beendet, wenn die Ausgangsgröße den vorgegebenen Maximalwert des Toleranzfensters überschreitet. Während der Pausephase ist die Leistungselektronik inaktiv, das heißt es entstehen keine Verluste durch die Leistungsübertragung. Unterschreitet die geregelte Ausgangsgröße den vorgegebenen Minimalwert, beginnt eine neue Pulsphase.

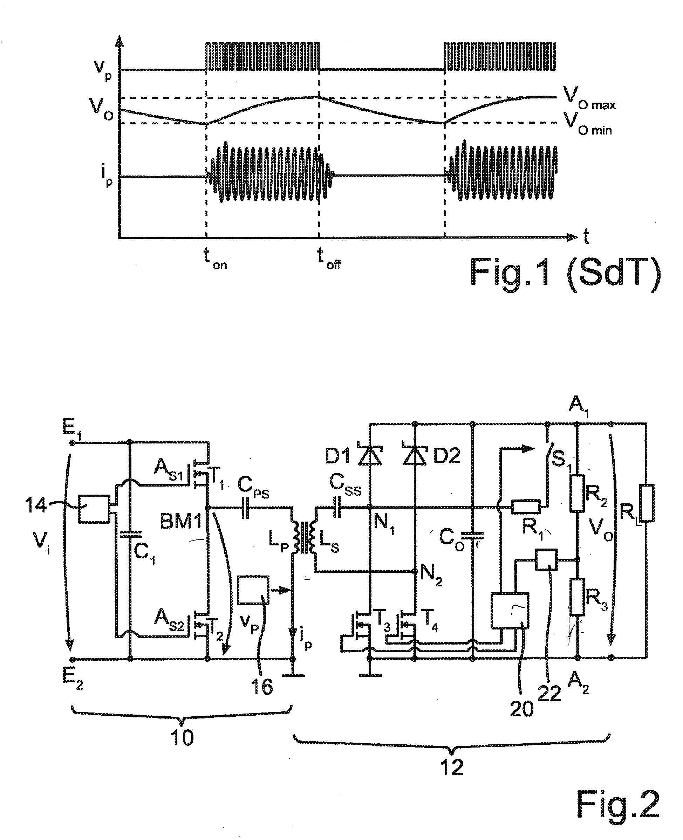

Der Puls-Pause-Betrieb kann auch in induktiven Energieübertragungssystemen zur Verbesserung des Wirkungsgrads eingesetzt werden. Fig. 1 zeigt die zeitliche Abfolge verschiedener Signale einer gattungsgemäßen bekannten Schaltungsanordnung. Dabei bezeichnet vₚ die über dem leistungssenderseitigen Resonanzkreis abfallende Spannung, das heißt die Spannung am ersten Brückenmittelpunkt gegenüber einem Bezugspotential, während mit ip der Strom durch den leistungssenderseitigen Resonanzkreis bezeichnet ist. Die Leistungsübertragung wird gestartet und die Ausgangsspannung Vₒ steigt an. Erreicht sie einen oberen Grenzwert, vorliegend V_{Omax}, beginnt die Pausephase, welche erst nach Erreichen eines unteren Grenzwerts, vorliegend Vₒₘᵢₙ wieder verlassen wird.

Der Beginn einer Pulsphase ist mit tₒₙ, das Ende einer Pulsphase mit t_{off} bezeichnet.

Häufig erfolgt in diesen Systemen eine Signalübertragung von der Sekundär- zur Primärseite, das heißt vom Leistungsempfänger zum Leistungssender, durch Impedanzmodulation. Dabei dient das Energiesignal als Träger, der durch einen auf der Sekundärseite angeordneten Impedanzmodulator amplituden- und/oder phasenmoduliert wird. Während der Pulsphase kann somit die Nachricht zum Beenden der Pulsphase von der Sekundärseite zur Primärseite übertragen werden. Danach befindet sich das System in der Pausephase, in der keine Energie übertragen wird und somit auch kein Signalträger zur Übertragung der Nachricht zum Beenden der Pausephase vorhanden ist.

Bei Resonanzwandlern, wie sie für die induktive Energieübertragung verwendbar sind, ist es möglich, dass die Übertragungseigenschaften des Systems keine Verringerung der geregelten Ausgangsgröße, beispielsweise des Ausgangsstroms oder der Ausgangsspannung, in einem definierten Arbeitsbereich zulassen, beispielsweise wenn die Leistung des angeschlossenen Verbrauchers sehr klein ist. Auch hier kann ein Puls-Pause-Betrieb dazu genutzt werden, den geregelten Parameter weiter zu verringern.

Im Stand der Technik ist es bekannt, Nachrichten von der Sekundärseite zur Primärseite durch einen zusätzlichen Datenkanal (Raummultiplex) zu übermitteln. Der zusätzliche Datenkanal kann dabei optisch, magnetisch, induktiv, kapazitiv oder per Funk arbeiten. Dieser Lösungsansatz benötigt jedoch zusätzliche Komponenten und erhöht damit die Designkomplexität und -kosten.

Die Aufgabe der vorliegenden Erfindung besteht deshalb darin, eine gattungsgemäße Schaltungsanordnung beziehungsweise ein gattungsgemäßes Verfahren derart weiterzubilden, dass eine Übertragung eines Signals von der Sekundärseite zur Primärseite auch bei Nicht-Vorhandensein eines Signalträgers bei möglichst geringen Kosten ermöglicht wird.

Diese Aufgabe wird gelöst durch eine Schaltungsanordnung mit den Merkmalen von Patentanspruch 1 sowie durch ein Verfahren mit den Merkmalen von Patentanspruch 16.

Die vorliegende Erfindung basiert auf der Erkenntnis, dass Kosten eingespart werden können, wenn auf einen zusätzlichen Datenkanal verzichtet wird. Dies ist vorliegend dann möglich, wenn die bestehende Anordnung aus gekoppelten Schwingkreisen zur Leistungsübertragung zusätzlich zur Übertragung einer Statusinformation genutzt wird. Bei deaktivierter Leistungsübertragung, das heißt es ist kein Signalträger vorhanden, werden dazu die gekoppelten Schwingkreise sprungförmig angeregt, wodurch sich eine freie Schwingung durch Überlagerung der Eigenschwingungen der gekoppelten Schwingkreise ausbildet. Damit sich diese Schwingungen ausbilden können, müssen beide Resonanzkreise kurzgeschlossen werden, was dazu führt, dass die Signalübertragung unabhängig von der Last- und Quellimpedanz ist. Da die Anregung bekannt ist, kann die beschriebene Methode weiterhin zur Identifikation von Parametern der Resonanzkreise, beispielsweise deren Induktivität oder Kopplungsfaktor, genutzt werden.

Erfindungsgemäß umfasst deshalb der Leistungsempfänger weiterhin eine Steuervorrichtung, die mit der Überwachungsvorrichtung gekoppelt ist, wobei die Steuervorrichtung ausgelegt ist, nach Feststellen des Erreichens des oberen Grenzwerts für die Ausgangsspannung durch die Überwachungsvorrichtung den mindestens einen leistungsempfängerseitigen Kondensator auf die Ausgangsspannung aufzuladen

Bevorzugt umfasst der Leistungssender weiterhin eine Auswertevorrichtung zur Bestimmung und Auswertung eines Stroms durch den leistungssenderseitigen Resonanzkreis, wobei die Auswertevorrichtung mit der Ansteuervorrichtung gekoppelt ist und ausgelegt ist, bei Feststellen eines vorgebbaren Verlaufs des Stroms durch den leistungssenderseitigen Resonanzkreis, der mit dem Erreichen des oberen oder des unteren Grenzwerts der Ausgangsspannung korreliert ist, die Ansteuervorrichtung zur Aktivierung und/oder Deaktivierung der Ansteuerung des ersten und des zweiten elektronischen Schalters zu veranlassen. Mit anderen Worten wird der Strom durch den leistungssenderseitigen Resonanzkreis demoduliert, um die von der Sekundärseite gesendete Information verfügbar zu machen.

Bei einer bevorzugten Ausführungsform ist in diesem Zusammenhang die Ansteuervorrichtung ausgelegt, dann, wenn die Auswertevorrichtung das Erreichen des oberen Grenzwerts für die Ausgangsspannung festgestellt hat, den zweiten elektronischen Schalter, der zwischen dem ersten Brückenmittelpunkt und einem der Eingangsanschlüsse gekoppelt ist, leitend zu schalten und den ersten elektronischen Schalter nichtleitend zu schalten. Dadurch wird der leistungssenderseitige Resonanzkreis kurzgeschlossen, wodurch ein Serienresonanzkreis hoher Güte entsteht.

Es ist weiterhin bevorzugt, dass die Steuervorrichtung ausgelegt ist, dann, wenn die Überwachungsvorrichtung das Erreichen des unteren Grenzwerts für die Ausgangsspannung festgestellt hat, den leistungsempfängerseitigen Resonanzkreis kurzzuschließen. Dadurch wird sekundärseitig eine abklingende Resonanzschwingung hervorgerufen, die, aufgrund der magnetischen Kopplung beider Schwingkreise, in beiden Maschen abklingende Stromverläufe hervorruft.

Die Ansteuervorrichtung ist in diesem Zusammenhang ausgelegt, den zweiten elektronischen Schalter solange leitend geschaltet zu lassen und den ersten elektronischen Schalter solange nichtleitend geschaltet zu lassen, bis die Auswertevorrichtung das Erreichen des unteren Grenzwerts für die Ausgangsspannung festgestellt hat. Erst wenn dies festgestellt wurde, wird der leistungssenderseitige Kurzschluss wieder aufgehoben, um mit der Energieübertragung vom Leistungssender auf den Leistungsempfänger fortzufahren.

Dabei kann die Ansteuervorrichtung ausgelegt sein dann, wenn die Auswertevorrichtung das Erreichen des unteren Grenzwerts für die Ausgangsspannung festgestellt hat, den ersten und den zweiten elektronischen Schalter zur Energieübertragung vom Leistungssender an den Leistungsempfänger anzusteuern. Dies setzt sich dann fort bis der obere Grenzwert für die Ausgangsspannung erreicht wird.

In einem Ausführungsbeispiel weist der Leistungsempfänger einen dritten, einen vierten und einen fünften elektronischen Schalter mit jeweils einer Steuerelektrode, einer Arbeitselektrode und einer Bezugselektrode auf, sowie eine erste und eine zweite Diode und einen Speicherkondensator.

In einer bevorzugten Ausführungsform sind die erste und die zweite Diode durch jeweils einen geschalteten Transistor ersetzt. Dies steigert die Effizienz. In der Pulsphase werden die Transistoren entsprechend dem fließenden Strom geschaltet, während sie in der Pausephase nichtleitend geschaltet sind.

Bei einem bevorzugten Ausführungsbeispiel ist die Diode unter Ausbildung eines ersten Knotens mit der Arbeitselektrode des dritten elektronischen Schalters gekoppelt, wobei die zweite Diode unter Ausbildung eines zweiten Knotens mit der Arbeitselektrode des vierten elektronischen Schalters gekoppelt ist, wobei die Serienschaltung aus der ersten Diode und dem dritten elektronischen Schalter und die Serienschaltung aus der zweiten Diode und dem vierten elektronischen Schalter zwischen den ersten und den zweiten Ausgangsanschluss gekoppelt ist, wobei der Speicherkondensator ebenfalls zwischen den ersten und den zweiten Ausgangsanschluss gekoppelt ist, wobei der leistungsempfängerseitige Serienresonanzkreis einen ersten und einen zweiten Anschluss aufweist, wobei der erste Anschluss mit dem ersten Knoten gekoppelt ist, wobei der zweite Anschluss mit dem zweiten Knoten gekoppelt ist, wobei der erste Knoten insbesondere über einen ohmschen Widerstand, über dem fünften elektronischen Schalter mit dem ersten Ausgangsanschluss gekoppelt ist. Bei einer alternativen Ausführungsform sind die beiden Dioden durch jeweils einen Schalter ersetzt. Dadurch lässt sich ein vollsynchroner Gleichrichter realisieren.

Der dritte und der vierte elektronische Schalter arbeiten im Pulsbetrieb als "ideale Diode" in einem Brückengleichrichter. In der Pausephase dienen sie zum Laden/Kurzschließen des Resonanzkreises.

In dem genannten Ausführungsbeispiel ist die Steuervorrichtung bevorzugt ausgelegt, dann, wenn die Überwachungsvorrichtung das Erreichen des oberen Grenzwerts für die Ausgangsspannung festgestellt hat, den fünften elektronischen Schalter leitend, den vierten elektronischen Schalter leitend und den dritten elektronischen Schalter nichtleitend zu schalten. Auf diese Weise wird der leistungsempfängerseitige Kondensator auf die Ausgangsspannung aufgeladen, so dass seine Ladung dafür zur Verfügung steht, am Ende der Pulsphase, das heißt bei Erreichen des unteren Grenzwerts für die Ausgangsspannung, ein Signal an die Leistungsempfängerseite zu senden, um eine erneute Pulsphase zu initiieren.

Die Steuervorrichtung kann weiterhin ausgelegt sein, dann, wenn die Überwachungsvorrichtung das Erreichen des unteren Grenzwerts für die Ausgangsspannung festgestellt hat, den fünften elektronischen Schalter nichtleitend, den vierten elektronischen Schalter leitend und den dritten elektronischen Schalter leitend zu schalten. Auf diese Weise wird der leistungsempfängerseitige Resonanzkreis kurzgeschlossen, wodurch eine Resonanzschwingung erzeugt wird, welche durch die Kopplung des leistungssenderseitigen und des leistensempfängerseitigen Resonanzkreises an die Leistungssenderseite übertragen wird.

Bei einer besonders bevorzugten Weiterbildung ist vorgesehen, dass der Leistungsempfänger einen dritten, einen vierten, einen fünften und einen sechsten elektronischen Schalter mit jeweils einer Steuerelektrode, einer Arbeitselektrode und einer Bezugselektrode umfasst, wobei der fünfte elektronische Schalter unter Ausbildung eines ersten Knotens mit der Arbeitselektrode des dritten elektronischen Schalters gekoppelt ist, wobei der sechste elektronische Schalter unter Ausbildung eines zweiten Knotens mit der Arbeitselektrode des vierten elektronischen Schalters gekoppelt ist, wobei die Serienschaltung aus dem fünften elektronischen Schalter und dem dritten elektronischen Schalter und die Serienschaltung aus dem sechsten elektronischen Schalter und dem vierten elektronischen Schalter zwischen den ersten und den zweiten Ausgangsanschluss gekoppelt ist, wobei der Speicherkondensator ebenfalls zwischen den ersten und den zweiten Ausgangsanschluss gekoppelt ist, wobei der leistungsempfängerseitige Resonanzkreis einen ersten und einen zweiten Anschluss aufweist, wobei der erste Anschluss mit dem ersten Knoten gekoppelt ist, wobei der zweite Anschuss mit dem zweiten Knoten gekoppelt ist. Durch den dritten, den vierten, den fünften und den sechsten elektronischen Schalter wird ein vollaktiver Synchrongleichrichter gebildet, der vorliegend eine Vollbrücke darstellt. Bei einer derartigen Ausführungsform können in der Pausephase auch die Schalter des Synchrongleichrichters zum Laden des leistungsempfängerseitigen Kondensators genutzt werden. Dazu sind die Schalter der Vollbrücke vor dem Kurzschließen des leistungsempfängerseitigen Resonanzkreises so zu schalten, dass der leistungsempfängerseitige Kondensator aufgeladen wird. Dies wird dadurch ermöglicht, dass einer der beiden hochliegenden Schalter und der gegenüberliegende tiefliegende Schalter, d.h. der tiefliegende Schalter des anderen Strangs, leitend geschaltet werden. Auf diese Weise kann die Serienschaltung aus dem fünften elektronischen Schalter sowie dem ohmschen Widerstand, die zwischen dem ersten Knoten und dem ersten Ausgangsanschluss vorgesehen sind, eingespart werden.

Bevorzugt ist in diesem Zusammenhang die Steuervorrichtung ausgelegt, dann, wenn die Überwachungsvorrichtung das Erreichen des oberen Grenzwerts für die Ausgangsspannung festgestellt hat, den fünften elektronischen Schalter und den vierten elektronischen Schalter leitend sowie den dritten elektronischen Schalter und den sechsten elektronischen Schalter nichtleitend zu schalten. Alternativ kann die Steuervorrichtung ausgelegt sein, dann, wenn die Überwachungsvorrichtung das Erreichen des oberen Grenzwerts für die Ausgangsspannung festgestellt hat, den fünften elektronischen Schalter und den vierten elektronischen Schalter nichtleitend sowie den dritten elektronischen Schalter und den sechsten elektronischen Schalter leitend zu schalten.

Die Steuervorrichtung ist bevorzugt weiterhin ausgelegt, dann, wenn die Überwachungsvorrichtung das Erreichen des unteren Grenzwerts für die Ausgangsspannung festgestellt hat, den fünften elektronischen Schalter und den sechsten elektronischen Schalter nichtleitend sowie den dritten elektronischen Schalter und den vierten elektronischen Schalter leitend zu schalten; Alternativ kann die Steuervorrichtung ausgelegt sein, dann, wenn die Überwachungsvorrichtung das Erreichen des unteren Grenzwerts für die Ausgangsspannung festgestellt hat, den fünften elektronischen Schalter und den sechsten elektronischen Schalter leitend sowie den dritten elektronischen Schalter und den vierten elektronischen Schalter nichtleitend zu schalten.

Die Auswertevorrichtung ist deshalb besonders vorteilhaft dazu ausgelegt, aus der Spannung, auf die der mindestens eine leistungsempfängerseitige Kondensator nach Feststellen des Erreichens des oberen Grenzwerts für die Ausgangsspannung aufgeladen wurde, aus den Induktivitäten der leistungssenderseitigen Impedanz und der leistungsempfängerseitigen Spule, die Kapazitäten des mindestens einen leistungssenderseitigen Kondensators und des mindestens einen leistungsempfängerseitigen Kondensators sowie der über dem mindestens einen leistungssenderseitigen Kondensator nach Erreichen des unteren Grenzwerts für die Ausgangsspannung abfallenden Spannung den Kopplungsfaktor der mindestens einen leistungssenderseitigen Impedanz und der leistungsempfängerseitigen Spule zu ermitteln. Dies ist ein wichtiger Faktor bei der induktiven Energieübertragung und ist sonst äußerst schwierig festzustellen.

Weitere vorteilhafte Ausführungsformen ergeben sich aus den Unteransprüchen.

Die mit Bezug auf die erfindungsgemäße Schaltungsanordnung vorgestellten bevorzugten Ausführungsbeispiele und deren Vorteile gelten entsprechend, soweit anwendbar, für das erfindungsgemäße Verfahren.

Im Nachfolgenden wird nunmehr ein Ausführungsbeispiel der vorliegenden Erfindung unter Bezugnahme auf die beigefügten Zeichnungen näher beschrieben. Es zeigen:
- Fig. 1: in schematischer Darstellung die zeitliche Abfolge diverser Signale eines bekannten induktiven Energieübertragungssystems im Puls-Pause-Betrieb;
- Fig. 2: in schematischer Darstellung den Aufbau eines Ausführungsbeispiels einer erfindungsgemäßen Schaltungsanordnung;
- Fig. 3a, Fig. 3b: für das in Fig. 2 dargestellte Ausführungsbeispiel einer erfindungsgemäßen Schaltungsanordnung unterschiedliche Maschen in Abhängigkeit der Schaltzustände der beteiligten Schalter; und
- Fig. 4: in schematischer Darstellung die zeitliche Abfolge diverser Signale für das in Fig. 2 dargestellte Ausführungsbeispiel einer erfindungsgemäßen Schaltungsanordnung.

Fig. 2 zeigt in schematischer Darstellung ein Ausführungsbeispiel einer erfindungsgemäßen Schaltungsanordnung. Der Leistungssender ist dabei mit 10 bezeichnet, der Leistungsempfänger mit 12. Der Leistungssender 10 weist einen Eingang mit einem ersten E1 und einem zweiten Eingangsanschluss E2 auf. Zwischen den Eingangsanschlüssen E1, E2 liegt eine Eingangsspannung Vᵢ an. Vorliegend ist als Schaltregler eine Halbbrückenschaltung vorgesehen, die einen ersten T₁ und einen zweiten elektronischen Schalter T₂ umfasst. Die Schalter T₁, T₂ sind seriell zwischen den ersten E1 und den zweiten Eingangsanschluss E2 gekoppelt. Zwischen den beiden elektronischen Schaltern T₁, T₂ ist ein erster Brückenmittelpunkt BM1 gebildet. Zwischen die Eingangsanschlüsse E1, E2 ist weiterhin ein Kondensator C₁ gekoppelt, der dazu dient, die Brückenschaltung mit einer möglichst stabilen Gleichspannung zu versorgen. Eine Ansteuervorrichtung 14 dient dazu, den ersten T₁ und den zweiten elektronischen Schalter T₂ mit jeweils einem Ansteuersignal AS1, AS2 anzusteuern. Jedes Ansteuersignal AS1, AS2 weist eine Schaltfrequenz fₛ auf. Die Schaltfrequenz fₛ beträgt insbesondere zwischen 110 kHz und 500 kHz.

Ein leistungssenderseitiger Resonanzkreis umfasst vorliegend einen leistungssenderseitigen Kondensator Cₚₛ sowie eine leistungssenderseitige Spule Lp. Diese sind zueinander in Serie geschaltet und zwar zwischen den ersten Brückenmittelpunkt BM1 und vorliegend den zweiten Eingangsanschluss E2, der als Bezugspotential wirkt. Der durch den leistungssenderseitigen Resonanzkreis Cₚₛ, Lp fließende leistungssenderseitige Resonanzstrom ist mit ip bezeichnet. Eine mit 16 bezeichnete Auswertevorrichtung dient zur Bestimmung und Auswertung des leistungssenderseitigen Resonanzstroms ip.

Der mit 12 bezeichnete Leistungsempfänger umfasst eine leistungsempfängerseitige Spule Lₛ, die mit der mindestens einen leistungssenderseitigen Spule Lp induktiv gekoppelt ist. Seriell zur leistungsempfängerseitigen Spule Lₛ ist ein leistungssenderseitiger Kondensator Cₛₛ angeordnet. Zwischen zwei Ausgangsklemmen A1, A2 ist ein Kondensator Cₒ gekoppelt. Dieser sorgt dafür, dass eine weitgehend konstante Ausgangsspannung Vₒ an einen Verbraucher R_{L} bereitgestellt wird.

Die Schaltungsanordnung wird im Puls-Pause-Betrieb betrieben, wobei erfindungsgemäß vorgesehen ist, den leistungsempfängerseitigen Kondensator Cₛₛ zu Beginn jeder Pausephase aufzuladen. Der Leistungsempfänger 12 weist einen Schalter T₃, einen Schalter T₄ und einen Schalter S₁ auf sowie eine Diode D1, eine Diode D2 und einen Speicherkondensator Cₒ auf. Die Diode D1 ist unter Ausbildung eines ersten Knotens N1 mit dem dritten Schalter T₃ gekoppelt. Die Diode D2 ist unter Ausbildung eines zweiten Knotens N2 mit dem Schalter T₄ gekoppelt. Die Serienschaltung aus der Diode D1 und dem Schalter T₃ sowie die Serienschaltung aus der Diode D2 und dem Schalter T₄ 4 ist zwischen den ersten A1 und den zweiten Ausgangsanschluss A2 gekoppelt. Der Speicherkondensator Cₒ ist ebenfalls zwischen die beiden Ausgangsanschlüsse A1, A2 gekoppelt. Der leistungsempfängerseitige Resonanzkreis Cₛₛ, Lₛ ist zwischen die Knoten N1, N2 gekoppelt. Der Knoten N1 ist über einen Widerstand R1 und den Schalter S₁ mit dem ersten Ausgangsanschluss A1 gekoppelt.

Eine Überwachungsvorrichtung 22 dient dazu, das Erreichen eines oberen Vₒₘₐₓ sowie eines unteren Grenzwerts V_{o min} der Ausgangsspannung Vₒ zu überwachen. Sie umfasst einen Spannungsteiler, der aus den Widerständen R2, R3 besteht. Die Überwachungsvorrichtung 22 ist mit der Steuervorrichtung 20 gekoppelt. Die Steuervorrichtung 20 sorgt im Pulsbetrieb dafür, dass die Schalter T₃ und T₄ in Abhängigkeit des Stroms als ideale Diode geschaltet werden.

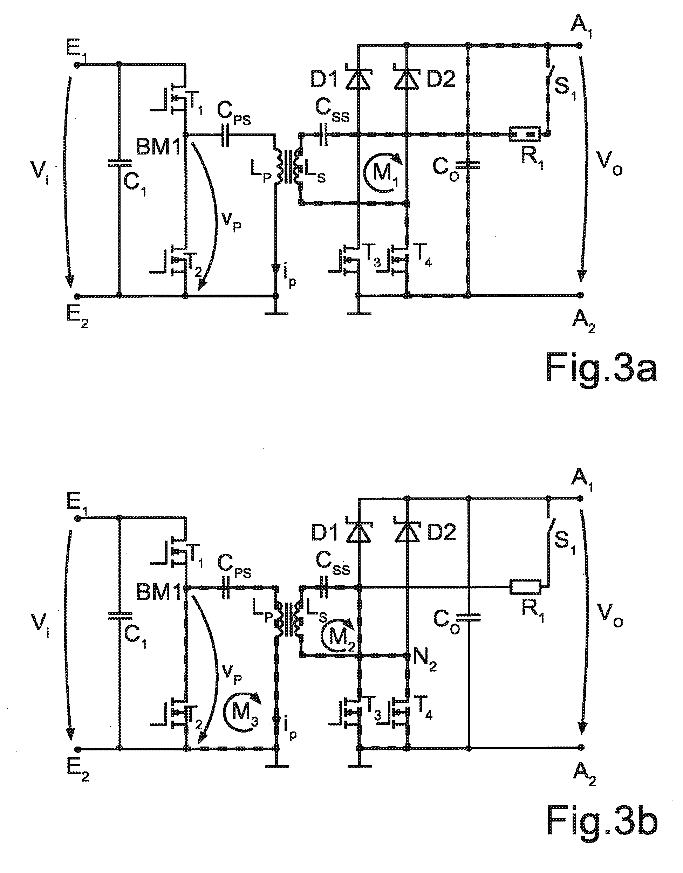

Zur Funktionsweise: Der leistungsempfängerseitige Resonanzkondensator Cₛₛ wird zu Beginn jeder Pausephase aufgeladen. Dazu werden die Schalter S₁ und T₄ leitend geschaltet, wodurch sich der Kondensator Cₛₛ vorliegend auf die Ausgangsspannung Vₒ auflädt. Die entsprechende Masche M₁ ist in Fig. 3a zu erkennen. Während dieser Phase führen die Dioden D1, D2 keinen Strom. Der Schalter T₂ ist während der Pausephase leitend geschaltet, der Schalter T₁ nichtleitend.

Nach Unterschreiten eines kritischen Pegels, beispielsweise einer Untergrenze V_{o min} der Ausgangsspannung Vₒ, muss die Pausephase beendet werden. Hierzu wird der Schalter S₁ nichtleitend geschaltet und der Schalter T₃ leitend. Die aus den kurzgeschlossenen Schaltern T₃, T₄, dem Resonanzkondensator Cₛₛ sowie der empfängerseitigen Spule Lₛ aufgespannte Masche M₂, siehe Fig. 3b, stellt einen Serienresonanzkreis hoher Güte dar. Auch bei der durch den kurzgeschlossenen Schalter T₂, den leistungssenderseitigen Kondensator Cₚₛ und die leistungssenderseitige Spule Lₛ gebildete Masche M₃ handelt es sich um einen Serienresonanzkreis hoher Güte. Die zu Beginn im leistungsempfängerseitigen Resonanzkondensator Cₛₛ gespeicherte Energie ruft infolge des Kurzschlusses eine abklingende Resonanzschwingung hervor, die aufgrund der magnetischen Kopplung beider Schwingkreise in beiden Maschen M₂, M₃ abklingende Stromverläufe hervorruft. Das Auftreten eines Stroms ip in der Masche M₃ kann auf der Leistungssenderseite einfach detektiert und zur Reaktivierung der Energieübertragung, das heißt eines Übergangs von der Pausephase zur Pulsphase, genutzt werden.

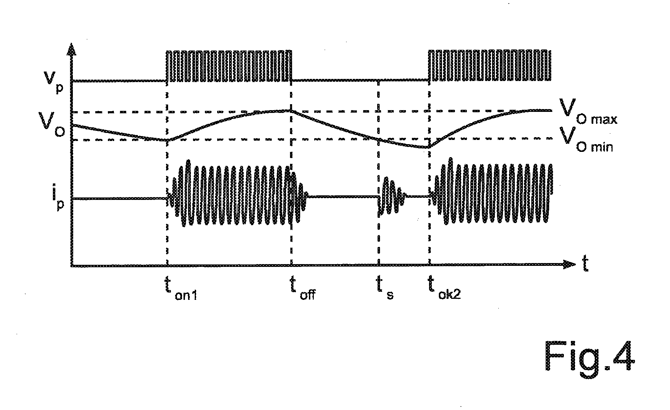

Fig. 4 zeigt in schematischer Darstellung die zeitlichen Verläufe der Spannung vₚ am Brückenmittelpunkt BM1, der Ausgangsspannung Vₒ sowie des Stroms ip. Wie Fig. 4 zu entnehmen ist, wird dann, wenn die Ausgangsspannung Vₒ die Untergrenze V_{o min} unterschreitet, die erwähnte abklingende Resonanzschwingung erzeugt. Dies ist in der Fig. 4 zum Zeitpunkt tₛ der Fall. Diese Schwingung des Stroms ip wird leistungssenderseitig detektiert, woraufhin die Energieübertragung wieder reaktiviert wird. Aufgrund der bei der Auswertung durch die Auswertungsvorrichtung 16 einhergehenden Verarbeitungszeiten ist dies erst zum Zeitpunkt tₒₙ₂ der Fall. Wie der Fig. 4 zu entnehmen ist, ist deshalb die Ausgangsspannung Vₒ noch etwas unter den Grundwert V_{o min} abgesunken. Dies lässt sich jedoch bei geeigneter Dimensionierung der unteren Grenze V_{o min} berücksichtigen.

Die Form der abklingenden Schwingung des Stroms ip ist abhängig von der Positionierung der Induktivitäten Lₛ, Lp zueinander sowie von der zu Beginn einer Übertragung im Resonanzkondensator Cₛₛ gespeicherten Energie. Ist diese Energie bekannt oder definiert, kann eine Auswertung dieser Zeitverläufe zur Identifikation der elektrischen Parameter der gekoppelten Spulen Lₛ, Lₚ genutzt werden.

Während im dargestellten Ausführungsbeispiel der leistungsempfängerseitige Kondensator Cₛₛ auf die Ausgangsspannung Vₒ aufgeladen wurde, kann er, je nach Anwendung, auch auf eine andere vorgebbare Spannung aufgeladen werden. Beispielsweise ist es in dem Fall, in dem der Kopplungsfaktor abgeschätzt werden soll, bevorzugt, den leistungsempfängerseitigen Kondensator Cₛₛ auf eine definierte Referenzspannung aufzuladen.

In einer nicht dargestellten Ausführungsform ist leistungsempfängerseitig ein vollaktiver Synchrongleichrichter vorgesehen, d.h. die Dioden D1 und D2 sind ebenfalls durch elektronische Schalter ersetzt. Der Synchrongleichrichter stellt eine Vollbrücke dar. Bei einer derartigen Ausführungsform können in der Pausephase auch die Schalter des Synchrongleichrichters zum Laden des leistungsempfängerseitigen Kondensators genutzt werden. Dazu sind die Schalter der Vollbrücke vor dem Kurzschließen des leistungsempfängerseitigen Resonanzkreises so zu schalten, dass der leistungsempfängerseitige Kondensator aufgeladen wird. Dies wird dadurch ermöglicht, dass einer der beiden hochliegenden Schalter und der gegenüberliegende tiefliegende Schalter, d.h. der tiefliegende Schalter des anderen Strangs, leitend geschaltet werden. Auf diese Weise können der Schalter S1 und der ohmsche Widerstand R1 der Darstellung von Fig. 2, Fig. 3a und Fig. 3b eingespart werden.

## Patentansprüche

1. Schaltungsanordnung zur induktiven Energieübertragung mit einem Leistungssender (10) und einem Leistungsempfänger (12),
wobei der Leistungssender (10) umfasst:
- einen Eingang mit einem ersten (E1) und einem zweiten Eingangsanschluss (E2);
- eine Brückenschaltung mit mindestens einem ersten (T₁) und einem zweiten elektronischen Schalter (T₂), die seriell zwischen den ersten (E1) und den zweiten Eingangsanschluss (E2) gekoppelt sind, wobei zwischen dem ersten (T₁) und dem zweiten elektronischen Schalter (T₂) ein erster Brückenmittelpunkt (BM1) gebildet ist;
- eine Ansteuervorrichtung (14) zum Ansteuern des ersten (T₁) und des zweiten elektronischen Schalters (T₂) mit jeweils einem Ansteuersignal (AS1; AS2); und
- einen leistungssenderseitigen Resonanzkreis, der mindestens einen leistungssenderseitigen Kondensator (Cₚₛ) und mindestens eine weitere leistungssenderseitige Impedanz (Lₚ) umfasst, die zueinander in Serie geschaltet sind, wobei der Resonanzkreis zwischen den ersten Brückenmittelpunkt (BM1) und einen der beiden Eingangsanschlüsse gekoppelt ist;
wobei der Leistungsempfänger (12) umfasst:
- einen leistungsempfängerseitigen Resonanzkreis, der mindestens einen leistungsempfängerseitigen Kondensator (Cₛₛ) und eine leistungsempfängerseitige Spule (Lₛ) umfasst, wobei die leistungsempfängerseitige Spule (Lₛ) mit der leistungssenderseitigen Impedanz (Lₚ) induktiv gekoppelt ist;
- einen Ausgang mit einem ersten (A1) und einem zweiten Ausgangsanschluss (A2) zum Bereitstellen einer Ausgangsspannung (Vₒ) an einen Verbraucher (R_{L});
- eine Überwachungsvorrichtung (22), die ausgelegt ist, das Erreichen eines oberen (V_{o max)} und das Erreichen eines unteren Grenzwerts (V_{o min}) für die Ausgangsspannung (Vₒ) zu überwachen, wobei die Überwachungsvorrichtung (22) mit der Ansteuervorrichtung (14) gekoppelt ist;
**dadurch gekennzeichnet, dass** die Ansteuervorrichtung (14) ausgelegt ist, bei Erreichen des oberen Grenzwerts (V_{o max}) für die Ausgangsspannung (Vₒ) die Ansteuerung des ersten (T₁) und des zweiten elektronischen Schalters (T₂) zu deaktivieren, und wobei die Ansteuervorrichtung (14) ausgelegt ist, bei Erreichen des unteren Grenzwerts (V_{o min}) für die Ausgangsspannung (Vₒ) die Ansteuerung des (T₁) und des zweiten elektronischen Schalters (T₂) zu aktivieren; und
**dass** der Leistungsempfänger (12) weiterhin eine Steuervorrichtung (20) umfasst, die mit der Überwachungsvorrichtung (22) gekoppelt ist, wobei die Steuervorrichtung (20) ausgelegt ist, nach Feststellen des Erreichens des oberen Grenzwerts (V_{o max}) für die Ausgangsspannung (Vₒ) durch die Überwachungsvorrichtung (22) den mindestens einen leistungsempfängerseitigen Kondensator (Cₛₛ) auf eine vorgebbare Spannung, insbesondere die Ausgangsspannung (Vₒ), aufzuladen.

2. Schaltungsanordnung nach Anspruch 1,
**dadurch gekennzeichnet,**
**dass** der Leistungssender (10) weiterhin eine Auswertevorrichtung (16) zur Bestimmung und Auswertung eines Stroms (iₚ) durch den leistungssenderseitigen Resonanzkreis umfasst,
wobei die Auswertevorrichtung (16) mit der Ansteuervorrichtung (14) gekoppelt ist und ausgelegt ist, bei Feststellen eines vorgebbaren Verlaufs des Stroms (iₚ) durch den leistungssenderseitigen Resonanzkreis, der mit dem Erreichen des oberen oder des unteren Grenzwerts (V_{o min}) der Ausgangsspannung (Vₒ) korreliert ist, die Ansteuervorrichtung (14) zur Aktivierung und/oder Deaktivierung der Ansteuerung des ersten (T₁) und des zweiten elektronischen Schalters (T₂) zu veranlassen.

3. Schaltungsanordnung nach Anspruch 2,
**dadurch gekennzeichnet,**
**dass** die Ansteuervorrichtung (14) ausgelegt ist, dann, wenn die Auswertevorrichtung (16) das Erreichen des oberen Grenzwerts (V_{o max}) für die Ausgangsspannung (Vₒ) festgestellt hat, den zweiten elektronischen Schalter (T₂), der zwischen dem ersten Brückenmittelpunkt (BM1) und einem der Eingangsanschlüsse gekoppelt ist, leitend zu schalten und den ersten elektronischen Schalter (T₁) nichtleitend zu schalten.

4. Schaltungsanordnung nach einem der vorhergehenden Ansprüche,
**dadurch gekennzeichnet,**
**dass** die Steuervorrichtung (20) ausgelegt ist, dann, wenn die Überwachungsvorrichtung (22) das Erreichen des unteren Grenzwerts (V_{o min}) für die Ausgangsspannung (Vₒ) festgestellt hat, den leistungsempfängerseitigen Resonanzkreis kurzzuschließen.

5. Schaltungsanordnung nach Anspruch 4,
**dadurch gekennzeichnet,**
**dass** die Ansteuervorrichtung (14) ausgelegt ist, den zweiten elektronischen Schalter (T₂) solange leitend geschaltet zu lassen und den ersten elektronischen Schalter (T₁) solange nichtleitend geschaltet zu lassen, bis die Auswertevorrichtung (16) das Erreichen des unteren Grenzwerts (V_{o min}) für die Ausgangsspannung (Vₒ) festgestellt hat.

6. Schaltungsanordnung nach Anspruch 5,
**dadurch gekennzeichnet,**
**dass** die Ansteuervorrichtung (14) ausgelegt ist, dann, wenn die Auswertevorrichtung (16) das Erreichen des unteren Grenzwerts (V_{o min}) für die Ausgangsspannung (Vₒ) festgestellt hat, den ersten (T₁) und den zweiten elektronischen Schalter (T₂) zur Energieübertragung vom Leistungssender (10) an den Leistungsempfänger (12) anzusteuern.

7. Schaltungsanordnung nach einem der vorhergehenden Ansprüche,
**dadurch gekennzeichnet,**
**dass** der Leistungsempfänger (12) einen dritten (T₃), einen vierten (T₄) und einen fünften elektronischen Schalter (S₁) mit jeweils einer Steuerelektrode, einer Arbeitselektrode und einer Bezugselektrode umfasst sowie eine erste (D1) und eine zweite Diode (D2) und einen Speicherkondensator (Cₒ).

8. Schaltungsanordnung nach Anspruch 7,
**dadurch gekennzeichnet,**
**dass** die erste (D1) und die zweite Diode (D2) durch jeweils einen Transistor gebildet sind.

9. Schaltungsanordnung nach einem der Ansprüche 7 oder 8,
**dadurch gekennzeichnet,**
**dass** die erste Diode (D1) unter Ausbildung eines ersten Knotens (N1) mit der Arbeitselektrode des dritten elektronischen Schalters (T₃) gekoppelt ist, wobei die zweite Diode (D2) unter Ausbildung eines zweiten Knotens (N2) mit der Arbeitselektrode des vierten elektronischen Schalters (T₄) gekoppelt ist, wobei die Serienschaltung aus der ersten Diode (D1) und dem dritten elektronischen Schalter (T₃) und die Serienschaltung aus der zweiten Diode (D2) und dem vierten elektronischen Schalter (T₄) zwischen den ersten (A1) und den zweiten Ausgangsanschluss (A2) gekoppelt ist, wobei der Speicherkondensator (Cₒ) ebenfalls zwischen den ersten (A1) und den zweiten Ausgangsanschluss (A2) gekoppelt ist, wobei der leistungsempfängerseitige Serienresonanzkreis einen ersten und einen zweiten Anschluss aufweist, wobei der erste Anschluss mit dem ersten Knoten (N1) gekoppelt ist, wobei der zweite Anschuss mit dem zweiten Knoten (N2) gekoppelt ist, wobei der erste Knoten (N1), insbesondere über einen ohmschen Widerstand, über den fünften elektronischen Schalter (S₁) mit dem ersten Ausgangsanschluss (A1) gekoppelt ist.

10. Schaltungsanordnung nach Anspruch 9,
**dadurch gekennzeichnet,**
**dass** die Steuervorrichtung (20) ausgelegt ist, dann, wenn die Überwachungsvorrichtung (22) das Erreichen des oberen Grenzwerts (V_{o max}) für die Ausgangsspannung (Vₒ) festgestellt hat, den fünften elektronischen Schalter (S₁) leitend, den vierten elektronischen Schalter (T₄) leitend und den dritten elektronischen Schalter (T₃) nichtleitend zu schalten.

11. Schaltungsanordnung nach einem der Ansprüche 8 bis 10,
**dadurch gekennzeichnet,**
**dass** die Steuervorrichtung (20) ausgelegt ist, dann, wenn die Überwachungsvorrichtung (22) das Erreichen des unteren Grenzwerts (V_{o min}) für die Ausgangsspannung (Vₒ) festgestellt hat, den fünften elektronischen Schalter (S₁) nichtleitend, den vierten elektronischen Schalter (T₄) leitend und den dritten elektronischen Schalter (T₃) leitend zu schalten.

12. Schaltungsanordnung nach einem der Ansprüche 1 bis 6,
**dadurch gekennzeichnet,**
**dass** der Leistungsempfänger (12) einen dritten (T₃), einen vierten (T₄), einen fünften (T₅) und einen sechsten elektronischen Schalter (T₆) mit jeweils einer Steuerelektrode, einer Arbeitselektrode und einer Bezugselektrode umfasst, wobei der fünfte elektronische Schalter (T₅) unter Ausbildung eines ersten Knotens (N1) mit der Arbeitselektrode des dritten elektronischen Schalters (T₃) gekoppelt ist, wobei der sechste elektronische Schalter (T₆) unter Ausbildung eines zweiten Knotens (N2) mit der Arbeitselektrode des vierten elektronischen Schalters (T₄) gekoppelt ist, wobei die Serienschaltung aus dem fünften elektronischen Schalter (T₅) und dem dritten elektronischen Schalter (T₃) und die Serienschaltung aus dem sechsten elektronischen Schalter (T₆) und dem vierten elektronischen Schalter (T₄) zwischen den ersten (A1) und den zweiten Ausgangsanschluss (A2) gekoppelt ist, wobei der Speicherkondensator (Cₒ) ebenfalls zwischen den ersten (A1) und den zweiten Ausgangsanschluss (A2) gekoppelt ist, wobei der leistungsempfängerseitige Resonanzkreis einen ersten und einen zweiten Anschluss aufweist, wobei der erste Anschluss mit dem ersten Knoten (N1) gekoppelt ist, wobei der zweite Anschuss mit dem zweiten Knoten (N2) gekoppelt ist.

13. Schaltungsanordnung nach Anspruch 12,
**dadurch gekennzeichnet,**
**dass** die Steuervorrichtung (20) ausgelegt ist, dann, wenn die Überwachungsvorrichtung (22) das Erreichen des oberen Grenzwerts (V_{o max}) für die Ausgangsspannung (Vₒ) festgestellt hat, den fünften elektronischen Schalter (T₅) und den vierten elektronischen Schalter (T₄) leitend sowie den dritten elektronischen Schalter (T₃) und den sechsten elektronischen Schalter (T₆) nichtleitend zu schalten; oder
oder dass die Steuervorrichtung (20) ausgelegt ist, dann, wenn die Überwachungsvorrichtung (22) das Erreichen des oberen Grenzwerts (V_{o max}) für die Ausgangsspannung (Vₒ) festgestellt hat, den fünften elektronischen Schalter (T₅) und den vierten elektronischen Schalter (T₄) nichtleitend sowie den dritten elektronischen Schalter (T₃) und den sechsten elektronischen Schalter(T₆) leitend zu schalten.

14. Schaltungsanordnung nach einem der Ansprüche 12 oder 13,
**dadurch gekennzeichnet,**
**dass** die Steuervorrichtung (20) ausgelegt ist, dann, wenn die Überwachungsvorrichtung (22) das Erreichen des unteren Grenzwerts (V_{o min}) für die Ausgangsspannung (Vₒ) festgestellt hat, den fünften elektronischen Schalter (T₅) und den sechsten elektronischen Schalter (T₆) nichtleitend sowie den dritten elektronischen Schalter (T₃) und den vierten elektronischen Schalter (T₄) leitend zu schalten; oder
**dass** die Steuervorrichtung (20) ausgelegt ist, dann, wenn die Überwachungsvorrichtung (22) das Erreichen des unteren Grenzwerts (V_{o min}) für die Ausgangsspannung (Vₒ) festgestellt hat, den fünften elektronischen Schalter (T₅) und den sechsten elektronischen Schalter (T₆) leitend sowie den dritten elektronischen Schalter (T₃) und den vierten elektronischen Schalter (T₄) nichtleitend zu schalten.

15. Schaltungsanordnung nach einem der Ansprüche 2 bis 14,
**dadurch gekennzeichnet,**
**dass** die Auswertevorrichtung (16) ausgelegt ist, aus der Spannung, auf die der mindestens eine leistungsempfängerseitige Kondensator (C_{SS}) nach Feststellen des Erreichens des oberen Grenzwerts (V_{o max}) für die Ausgangsspannung (Vₒ) aufgeladen wurde, aus den Induktivitäten der leistungssendeseitigen Impedanz (Lₚ) und der leistungsempfängerseitigen Spule (Lₛ), den Kapazitäten des mindestens einen leistungssenderseitigen Kondensators (Cₚₛ) und des mindestens einen leistungsempfängerseitigen Kondensators (Cₛₛ) sowie der über dem mindestens einen leistungssenderseitigen Kondensator (Cₚₛ) nach Erreichen des unteren Grenzwerts (V_{o min}) für die Ausgangsspannung (Vₒ) abfallenden Spannung den Kopplungsfaktor der mindestens einen leistungssenderseitigen Impedanz (Lₚ) und der leistungsempfängerseitigen Spule (Lₛ) zu ermitteln.

16. Verfahren zur induktiven Energieübertragung mittels einer Schaltungsanordnung mit einem Leistungssender (10) und einem Leistungsempfänger (12),
wobei der Leistungssender (10) umfasst: einen Eingang mit einem ersten (E1) und einem zweiten Eingangsanschluss (E2); eine Brückenschaltung mit mindestens einem ersten (T₁) und einem zweiten elektronischen Schalter (T₂), die seriell zwischen den ersten (E1) und den zweiten Eingangsanschluss (E2) gekoppelt sind, wobei zwischen dem ersten (T₁) und dem zweiten elektronischen Schalter (T₂) ein erster Brückenmittelpunkt (BM1) gebildet ist; eine Ansteuervorrichtung (14) zum Ansteuern des ersten (T₁) und des zweiten elektronischen Schalters (T₂) mit jeweils einem Ansteuersignal (AS1; AS2); und einen leistungssenderseitigen Resonanzkreis, der mindestens einen leistungssenderseitigen Kondensator (Cₚₛ) und mindestens eine weitere leistungssenderseitige Impedanz (Lₚ) umfasst, die zueinander in Serie geschaltet sind, wobei der Resonanzkreis zwischen den ersten Brückenmittelpunkt (BM1) und einen der beiden Eingangsanschlüsse gekoppelt ist;
wobei der Leistungsempfänger (12) umfasst: einen leistungsempfängerseitigen Resonanzkreis, der mindestens einen leistungsempfängerseitigen Kondensator (Cₛₛ) und eine leistungsempfängerseitige Spule (Lₛ) umfasst, wobei die leistungsempfängerseitige Spule (Lₛ) mit der leistungssenderseitigen Impedanz (Lₚ) induktiv gekoppelt ist; einen Ausgang mit einem ersten (A1) und einem zweiten Ausgangsanschluss (A2) zum Bereitstellen einer Ausgangsspannung (Vₒ) an einen Verbraucher (R_{L}); eine Überwachungsvorrichtung (22), die ausgelegt ist, das Erreichen eines oberen (V_{o max}) und das Erreichen eines unteren Grenzwerts (V_{o min}) für die Ausgangsspannung (Vₒ) zu überwachen, wobei die Überwachungsvorrichtung (22) mit der Ansteuervorrichtung (14) gekoppelt ist; **gekennzeichnet durch** folgende Schritte:
a) Auslegen der Ansteuervorrichtung (14) derart, dass bei Erreichen des oberen Grenzwerts (V_{o max)} für die Ausgangsspannung (Vₒ) die Ansteuerung des ersten (T₁) und des zweiten elektronischen Schalters (T₂) deaktiviert wird und bei Erreichen des unteren Grenzwerts (V_{o min}) für die Ausgangsspannung (Vₒ) die Ansteuerung des ersten (T₁) und des zweiten elektronischen Schälters (T₂.) aktiviert wird; und
b) nach Feststellen des Erreichens des oberen Grenzwerts (V_{o max}) für die Ausgangsspannung (Vₒ): Aufladen des mindestens einen leistungsempfängerseitigen Kondensators (Cₛₛ) auf eine vorgebbare Spannung, insbesondere die Ausgangsspannung (Vₒ).

## Claims

1. Circuit assembly for inductive energy transfer with a power transmitter (10) and a power receiver (12),
wherein the power transmitter (10) includes:
- an input with a first (E1) and a second input terminal (E2);
- a bridge circuit with at least a first (T₁) and a second electronic switch (T₂) serially coupled between the first (E1) and the second input terminal (E2), wherein a first bridge center (BM1) is formed between the first (T₁) and the second electronic switch (T₂);
- a driving device (14) for driving the first (T₁) and the second electronic switch (T₂) each with a drive signal (AS1; AS2); and
- a power transmitter side resonant circuit including at least one power transmitter side capacitor (Cₚₛ) and at least one further power transmitter side impedance (Lp), which are connected in series with each other, wherein the resonant circuit is coupled between the first bridge center (BM1) and one of the two input terminals;
wherein the power receiver (12) includes:
- a power receiver side resonant circuit including at least one power receiver side capacitor (Cₛₛ) and a power receiver side coil (Lₛ), wherein the power receiver side coil (Lₛ) is inductively coupled to the power transmitter side impedance (Lp);
- an output with a first (A1) and a second output terminal (A2) for providing an output voltage (Vₒ) to a load (R_{L});
- a monitoring device (22) adapted to monitor the attainment of an upper (V_{o max}) and the attainment of a lower limit value (V_{o min}) for the output voltage (Vₒ), wherein the monitoring device (22) is coupled to the driving device (14);
**characterized in that**
the driving device (14) is adapted to deactivate the drive of the first (T₁) and the second electronic switch (T₂) upon attainment of the upper limit value (V_{o max}) for the output voltage (Vₒ), and wherein the driving device (14) is adapted to activate the drive of the first (T₁) and the second electronic switch (T₂) upon attainment of the lower limit value (V_{o min}) for the output voltage (Vₒ); and
the power receiver (12) further includes a control device (20) coupled to the monitoring device (22), wherein the control device (20) is adapted to charge the at least one power receiver side capacitor (Cₛₛ) to a presettable voltage, in particular the output voltage (Vₒ), after determining the attainment of the upper limit value (V_{o max}) for the output voltage (Vₒ) by the monitoring device (22).

2. Circuit assembly according to claim 1,
**characterized in that**
the power transmitter (10) further includes an evaluating device (16) for determining and evaluating a current (ip) through the power transmitter side resonant circuit,
wherein the evaluating device (16) is coupled to the driving device (14) and is adapted to cause the driving device (14) to activate and/or deactivate the drive of the first (T₁) and the second electronic switch (T₂) upon determining a presettable progression of the current (ip) through the power transmitter side resonant circuit, which is correlated with the attainment of the upper or lower limit value (V_{o min}) of the output voltage (Vₒ).

3. Circuit assembly according to claim 2,
**characterized in that**
the driving device (14) is adapted to switch the second electronic switch (T₂) coupled between the first bridge center (BM1) and one of the input terminals to the conductive state and to switch the first electronic switch (T₁) to the non-conductive state if the evaluating device (16) has determined the attainment of the upper limit value (V_{o max}) for the output voltage (Vₒ).

4. Circuit assembly according to any one of the preceding claims,
**characterized in that**
the control device (20) is adapted to short-circuit the power receiver side resonant circuit if the monitoring device (22) has determined the attainment of the lower limit value (V_{o min}) for the output voltage (Vₒ).

5. Circuit assembly according to claim 4,
**characterized in that**
the driving device (14) is adapted to keep the second electronic switch (T₂) switched to the conductive state and to keep the first electronic switch (T₁) switched to the non-conductive state until the evaluating device (16) has determined the attainment of the lower limit value (V_{o min}) for the output voltage (Vₒ).

6. Circuit assembly according to claim 5,
**characterized in that**
the driving device (14) is adapted to drive the first (T₁) and the second electronic switch (T₂) for energy transfer from the power transmitter (10) to the power receiver (12) if the evaluating device (16) has determined the attainment of the lower limit value (V_{o min}) for the output voltage (Vₒ).

7. Circuit assembly according to any one of the preceding claims,
**characterized in that**
the power receiver (12) includes a third (T₃), a fourth (T₄) and a fifth electronic switch (S₁) each having a control electrode, a working electrode and a reference electrode, as well as a first (D1) and a second diode (D2) and a storage capacitor (Cₒ).

8. Circuit assembly according to claim 7,
**characterized in that**
the first (D1) and the second diode (D2) are each constituted by a transistor.

9. Circuit assembly according to any one of claims 7 or 8,
**characterized in that**
the first diode (D1) is coupled to the working electrode of the third electronic switch (T₃) forming a first node (N1), wherein the second diode (D2) is coupled to the working electrode of the fourth electronic switch (T₄) forming a second node (N2), wherein the series connection of the first diode (D1) and the third electronic switch (T₃) and the series connection of the second diode (D2) and the fourth electronic switch (T₄) are coupled between the first (A1) and the second output terminal (A2), wherein the storage capacitor (Cₒ) is also coupled between the first (A1) and the second output terminal (A2), wherein the power receiver side series resonant circuit has a first and a second terminal, wherein the first terminal is coupled to the first node (N1), wherein the second terminal is coupled to the second node (N2), wherein the first node (N1) is coupled to the first output terminal (A1) via the fifth electronic switch (S₁), in particular via an ohmic resistance.

10. Circuit assembly according to claim 9,
**characterized in that**
the control device (20) is adapted to switch the fifth electronic switch (S₁) to the conductive state, the fourth electronic switch (T₄) to the conductive state and the third electronic switch (T₃) to the non-conductive state if the monitoring device (22) has determined the attainment of the upper limit value (V_{o max)} for the output voltage (Vₒ).

11. Circuit assembly according to any one of claims 8 to 10,
**characterized in that**
the control device (20) is adapted to switch the fifth electronic switch (S₁) to the non-conductive state, the fourth electronic switch (T₄) to the conductive state and the third electronic switch (T₃) to the conductive state if the monitoring device (22) has determined the attainment of the lower limit value (V_{o min}) for the output voltage (Vₒ).

12. Circuit assembly according to any one of claims 1 to 6,
**characterized in that**
the power receiver (12) has a third (T₃), a fourth (T₄), a fifth (T₅) and a sixth electronic switch (T₆) each having a control electrode, a working electrode and a reference electrode, wherein the fifth electronic switch (T₅) is coupled to the working electrode of the third electronic switch (T₃) forming a first node (N1), wherein the sixth electronic switch (T₆) is coupled to the working electrode of the fourth electronic switch (T₄) forming a second node (N2), wherein the series connection of the fifth electronic switch (T₅) and the third electronic switch (T₃) and the series connection of the sixth electronic switch (T₆) and the fourth electronic switch (T₄) are coupled between the first (A1) and the second output terminal (A2), wherein the storage capacitor (Cₒ) is also coupled between the first (A1) and the second output terminal (A2), wherein the power receiver side resonant circuit has a first and a second terminal, wherein the first terminal is coupled to the first node (N1), wherein the second terminal is coupled to the second node (N2).

13. Circuit assembly according to claim 12,
**characterized in that**
the control device (20) is adapted to switch the fifth electronic switch (T₅) and the fourth electronic switch (T₄) to the conductive state as well as to switch the third electronic switch (T₃) and the sixth electronic switch (T₆) to the non-conductive state if the monitoring device (22) has determined the attainment of the upper limit value (V_{o max}) for the output voltage (Vₒ); or
the control device (20) is adapted to switch the fifth electronic switch (T₅) and the fourth electronic switch (T₄) to the non-conductive state as well as to switch the third electronic switch (T₃) and the sixth electronic switch (T₆) to the conductive state if the monitoring device (22) has determined the attainment of the upper limit value (V_{o max}) for the output voltage (Vₒ).

14. Circuit assembly according to any one of claims 12 or 13,
**characterized in that**
the control device (20) is adapted to switch the fifth electronic switch (T₅) and the sixth electronic switch (T₆) to the non-conductive state as well as to switch the third electronic switch (T₃) and the fourth electronic switch (T₄) to the conductive state if the monitoring device (22) has determined the attainment of the lower limit value (V_{o min}) for the output voltage (Vₒ); or
the control device (20) is adapted to switch the fifth electronic switch (T₅) and the sixth electronic switch (T₆) to the conductive state as well as to switch the third electronic switch (T₃) and the fourth electronic switch (T₄) to the non-conductive state if the monitoring device (22) has determined the attainment of the lower limit value (V_{o min}) for the output voltage (Vₒ).

15. Circuit assembly according to any one of claims 2 to 14,
**characterized in that**
the evaluating device (16) is adapted to determine the coupling factor of the at least one power transmitter side impedance (Lₚ) and the power receiver side coil (Lₛ) from the voltage, to which the at least one power receiver side capacitor (Cₛₛ) was charged after determining the attainment of the upper limit value (V_{o max}) for the output voltage (Vₒ), from the inductivities of the power transmitter side impedance (Lₚ) and the power receiver side coil (Lₛ), the capacities of the at least one power transmitter side capacitor (Cₚₛ) and the at least one power receiver side capacitor (Cₛₛ), as well as the voltage dropping across the at least one power transmitter side capacitor (Cₚₛ) after attainment of the lower limit value (V_{o min}) for the output voltage (Vₒ).

16. Method for inductive energy transfer by means of a circuit assembly with a power transmitter (10) and a power receiver (12),
wherein the power transmitter (10) includes: an input with a first (E1) and a second input terminal (E2); a bridge circuit with at least a first (T₁) and a second electronic switch (T₂) serially coupled between the first (E1) and the second input terminal (E2), wherein a first bridge center (BM1) is formed between the first (T₁) and the second electronic switch (T₂); a driving device (14) for driving the first (T₁) and the second electronic switch (T₂) each with a drive signal (AS1; AS2); and a power transmitter side resonant circuit including at least one power transmitter side capacitor (Cₚₛ) and at least one further power transmitter side impedance (Lp), which are connected in series with each other, wherein the resonant circuit is coupled between the first bridge center (BM1) and one of the two input terminals;
wherein the power receiver (12) includes: a power receiver side resonant circuit including at least one power receiver side capacitor (Cₛₛ) and a power receiver side coil (Lₛ), wherein the power receiver side coil (Lₛ) is inductively coupled to the power transmitter side impedance (Lp); an output with a first (A1) and a second output terminal (A2) for providing an output voltage (Vₒ) to a load (R_{L}); a monitoring device (22) adapted to monitor the attainment of an upper (V_{o max}) and the attainment of a lower limit value (V_{o min}) for the output voltage (Vₒ), wherein the monitoring device (22) is coupled to the driving device (14);
**characterized by** the following steps:
a) adapting the driving device (14) such that the drive of the first (T₁) and the second electronic switch (T₂) is deactivated upon attainment of the upper limit value (V_{o max}) for the output voltage (Vₒ), and the drive of the first (T₁) and the second electronic switch (T₂) is activated upon attainment of the lower limit value (V_{o min}) for the output voltage (Vₒ); and
b) after determining the attainment of the upper limit value (V_{o max}) for the output voltage (Vₒ): charging the at least one power receiver side capacitor (Cₛₛ) to a presettable voltage, in particular the output voltage (Vₒ).

## Revendications

1. Agencement de circuit, destiné à la transmission inductive d'énergie avec un émetteur (10) de puissance et un récepteur (12) de puissance, moyennant quoi l'émetteur (10) de puissance comprend :
- une entrée avec un premier (E1) et un deuxième (E2) raccord d'entrée ;
- un circuit en pont avec au moins un premier (T₁) et un deuxième (T₂) commutateur électronique, qui sont couplés en série entre le premier (E1) et le deuxième (E2) raccords d'entrée, moyennant quoi un premier point médian du pont (BM1) est formé entre le premier (T₁) et le deuxième (T₂) commutateur électronique ;
- un dispositif (14) d'excitation, destiné à exciter le premier (T₁) et le deuxième (T₂) commutateur électronique avec respectivement un signal d'excitation (AS1 ; AS2) et
- un circuit de résonance, côté émetteur de puissance, qui comprend au moins un condensateur (Cₚₛ), côté émetteur de puissance et au moins une autre impédance (Lp), côté émetteur de puissance, qui sont commutés entre eux en série, moyennant quoi le circuit de résonance est couplé entre le premier point médian du pont (BM1) et l'un des deux raccords d'entrée ;
moyennant quoi le récepteur (12) de puissance comprend :
- un circuit de résonance, côté récepteur de puissance, qui comprend au moins un condensateur (Cₛₛ), côté récepteur de puissance et une bobine (Lₛ), côté récepteur de puissance, moyennant quoi la bobine (Lₛ), côté récepteur de puissance, est couplée de manière inductive avec l'impédance (Lp), côté émetteur de puissance ;
- une sortie avec un premier (A1) et un deuxième (A2) raccord de sortie, destinés à mettre une tension (Vₒ) de sortie à la disposition d'un consommateur (R_{L}) ;
- un mécanisme (22) de surveillance, qui est conçu pour surveiller l'atteinte d'une valeur limite supérieure (V_{o max}) et l'atteinte d'une valeur limite inférieure (V_{o min}) de la tension (Vₒ) de sortie, moyennant quoi le mécanisme (22) de surveillance est couplé avec le mécanisme (14) d'excitation ;
**caractérisé en ce que**
le mécanisme (14) d'excitation est conçu pour désactiver l'excitation du premier (T₁) et du deuxième (T₂) commutateur électronique, en cas d'atteinte de la valeur limite supérieure (V_{o max}) de la tension (Vₒ) de sortie et moyennant quoi le mécanisme (14) d'excitation est conçu pour activer l'excitation du premier (T₁) et du deuxième (T₂) commutateur électronique, en cas d'atteinte de la valeur limite inférieure (V_{o min}) de la tension (Vₒ) de sortie
et que
le récepteur (12) de puissance comprend, en outre, un mécanisme (20) de commande, qui est couplé avec le mécanisme (22) de surveillance, moyennant quoi le mécanisme (20) de commande est conçu, pour charger, après constatation de l'atteinte de la valeur limite supérieure (V_{o max}) de la tension (Vₒ) de sortie par le mécanisme (22) de surveillance, le au moins un condensateur (Cₛₛ), côté récepteur de puissance, à une tension pouvant être prédéfinie, en particulier la tension (Vₒ) de sortie.

2. Agencement de circuit selon la revendication 1,
**caractérisé en ce que**
l'émetteur (10) de puissance comprend, en outre, un mécanisme (16) d'évaluation, destiné à déterminer et à évaluer un courant (ip) par le biais du circuit de résonance, côté émetteur de puissance,
moyennant quoi le mécanisme (16) d'évaluation est couplé avec le mécanisme (14) d'excitation et est conçu, en cas de constatation d'une évolution, pouvant être prédéfinie, du courant (ip) à travers le circuit de résonance, côté émetteur de puissance, qui est corrélé avec l'atteinte de la valeur limite supérieure ou de la valeur limite inférieure (V_{o min}) de la tension (Vₒ) de sortie, pour déclencher le mécanisme (14) d'excitation, destiné à activer et / ou désactiver l'excitation du premier (T₁) et du deuxième (T₂) commutateur électronique.

3. Agencement de circuit selon la revendication 2,
**caractérisé en ce que**
le mécanisme (14) d'excitation est conçu, dans ce cas, lorsque le mécanisme (16) d'évaluation a constaté l'atteinte de la valeur limite supérieure (V_{o max}) de la tension (Vₒ) de sortie, pour commuter de manière conductrice le deuxième commutateur électronique (T₂), qui est couplé entre le premier point médian du pont (BM1) et l'un des raccords d'entrée et pour commuter de manière non conductrice le premier (T₁) commutateur électronique.

4. Agencement de circuit selon l'une des revendications précédentes,
**caractérisé en ce que**
le mécanisme (20) de commande est conçu, dans ce cas, lorsque le mécanisme (22) de surveillance a constaté l'atteinte de la valeur limite inférieure (V_{o min}) de la tension (Vₒ) de sortie, pour court-circuiter le circuit de résonance, côté récepteur de puissance.

5. Agencement de circuit selon la revendication 4,
**caractérisé en ce que**
le mécanisme (14) d'excitation est conçu pour laisser le deuxième commutateur électronique (T₂) commuté de manière conductrice et pour laisser le premier commutateur électronique (T₁) commuté de manière non conductrice, jusqu'à ce que le mécanisme (16) d'évaluation ait constaté l'atteinte de la valeur limite inférieure (V_{o min}) de la tension (Vₒ) de sortie.

6. Agencement de circuit selon la revendication 5,
**caractérisé en ce que**
le mécanisme (14) d'excitation est conçu, dans ce cas, lorsque le mécanisme (16) d'évaluation a constaté l'atteinte de la valeur limite inférieure (V_{o min}) de la tension (Vₒ) de sortie, pour exciter le premier (T₁) et le deuxième (T₂) commutateur électronique, afin de transmettre l'énergie de l'émetteur (10) de puissance au récepteur (12) de puissance.

7. Agencement de circuit selon l'une des revendications précédentes,
**caractérisé en ce que**
le récepteur (12) de puissance comprend un troisième (T₃), un quatrième (T₄) et un cinquième (S₁) commutateur électronique, avec respectivement une électrode de commande, une électrode active et une électrode de référence, ainsi qu'une première (D1) et une seconde (D2) diode et un condensateur (Cₒ) de stockage.

8. Agencement de circuit selon la revendication 7,
**caractérisé en ce que**
la première (D1) et la seconde (D2) diodes sont formées par, respectivement, un transistor.

9. Agencement de circuit selon l'une des revendications 7 ou 8,
**caractérisé en ce que**
la première diode (D1) est couplée avec l'électrode active du troisième commutateur électronique (T₃) en formant un premier noeud (N1), moyennant quoi la seconde diode (D2) est couplée avec l'électrode active du quatrième commutateur électronique (T₄) en formant un second noeud (N2), moyennant quoi la commutation en série, constituée de la première diode (D1) et du troisième commutateur électronique (T₃) et la commutation en série, constituée de la seconde diode (D2) et du quatrième commutateur électronique (T₄), sont couplées entre le premier (A1) et le second (A2) raccord de sortie, moyennant quoi le condensateur (Cₒ) de stockage est également couplé entre le premier (A1) et le second raccord (A2) de sortie, moyennant quoi le circuit de résonance en série, côté récepteur de puissance, présente un premier et un second raccordement, moyennant quoi le premier raccordement est couplé avec le premier noeud (N1), moyennant quoi le second raccordement est couplé avec le second noeud (N2), moyennant quoi le premier noeud (N1) est couplé, en particulier par l'intermédiaire d'une résistance ohmique, au-dessus du cinquième commutateur électronique (S₁), avec le premier (A1) raccord de sortie.

10. Agencement de circuit selon la revendication 9,
**caractérisé en ce que**
le mécanisme (20) de commande est conçu, dans ce cas, lorsque le mécanisme (22) de surveillance a constaté l'atteinte de la valeur limite supérieure (V_{o max}) de la tension (Vₒ) de sortie, pour commuter le cinquième commutateur électronique (S₁) de manière conductrice, le quatrième commutateur électronique (T₄) de manière conductrice et le troisième quatrième commutateur électronique (T₃) de manière non conductrice.

11. Agencement de circuit selon l'une des revendications 8 à 10,
**caractérisé en ce que**
le mécanisme (20) de commande est conçu, dans ce cas, lorsque le mécanisme (22) de surveillance a constaté l'atteinte de la valeur limite inférieure (V_{o min}) de la tension (Vₒ) de sortie, pour commuter le cinquième commutateur électronique (S₁) de manière non conductrice, le quatrième commutateur électronique (T₄) de manière conductrice et le troisième commutateur électronique (T₃) de manière conductrice.

12. Agencement de circuit selon la revendication 1 à 6,
**caractérisé en ce que**
le récepteur (12) de puissance comprend un troisième (T₃), un quatrième (T₄), un cinquième (T₅) et un sixième (T₆) commutateur électronique, avec, respectivement une électrode de commande, une électrode active et une électrode de référence, moyennant quoi le cinquième commutateur électronique (T₅) est couplé avec l'électrode active du troisième commutateur électronique (T₃) en formant un premier noeud (N1), moyennant quoi le sixième commutateur électronique (T₆) est couplé avec l'électrode active du quatrième commutateur électronique (T₄) en formant un second noeud (N2), moyennant quoi la commutation en série, constituée du cinquième commutateur électronique (T₅) et du troisième commutateur électronique (T₃) et la commutation en série, constituée du sixième commutateur électronique (T₆) et du quatrième commutateur électronique (T₄), sont couplées entre le premier (A1) et le second (A2) raccord de sortie, moyennant quoi le condensateur (Cₒ) de stockage est également couplé entre le premier (A1) et le second raccord (A2) de sortie, moyennant quoi le circuit de résonance, côté récepteur de puissance, présente un premier et un second raccordement, moyennant quoi le premier raccordement est couplé avec le premier noeud (N1), moyennant quoi le second raccordement est couplé avec le second noeud (N2).

13. Agencement de circuit selon la revendication 12,
**caractérisé en ce que**
le mécanisme (20) de commande est conçu, dans ce cas, lorsque le mécanisme (22) de surveillance a constaté l'atteinte de la valeur limite supérieure (V_{o max}) de la tension (Vₒ) de sortie, pour commuter le cinquième commutateur électronique (T₅) et le quatrième commutateur électronique (T₄) de manière conductrice, ainsi que le troisième commutateur électronique (T₃) et le sixième commutateur électronique (T₆) de manière non conductrice
ou que
le mécanisme (20) de commande est conçu, dans ce cas, lorsque le mécanisme (22) de surveillance a constaté l'atteinte de la valeur limite supérieure (V_{o max}) de la tension (Vₒ) de sortie, pour commuter le cinquième commutateur électronique (T₅) et le quatrième commutateur électronique (T₄) de manière non conductrice, ainsi que le troisième commutateur électronique (T₃) et le sixième commutateur électronique (T₆) de manière conductrice.

14. Agencement de circuit selon l'une des revendications 12 ou 13,
**caractérisé en ce que**
le mécanisme (20) de commande est conçu, dans ce cas, lorsque le mécanisme (22) de surveillance a constaté l'atteinte de la valeur limite inférieure (V_{o min}) de la tension (Vₒ) de sortie, pour commuter le cinquième commutateur électronique (T₅) et le sixième commutateur électronique (T₆) de manière non conductrice, ainsi que le troisième commutateur électronique (T₃) et le quatrième commutateur électronique (T₄) de manière conductrice
ou que
le mécanisme (20) de commande est conçu, dans ce cas, lorsque le mécanisme (22) de surveillance a constaté l'atteinte de la valeur limite inférieure (V_{o min}) de la tension (Vₒ) de sortie, pour commuter le cinquième commutateur électronique (T₅) et le sixième commutateur électronique (T₆) de manière conductrice, ainsi que le troisième commutateur électronique (T₃) et le quatrième commutateur électronique (T₄) de manière non conductrice.

15. Agencement de circuit selon l'une des revendications 2 à 14,
**caractérisé en ce que**
le mécanisme (16) d'évaluation est conçu, à partir de la tension, à laquelle le au moins un condensateur (Cₛₛ), côté récepteur de puissance, a été chargé, après constatation de l'atteinte de la valeur limite supérieure (V_{o max}) de la tension (Vₒ) de sortie, à partir des inductivités de l'impédance (Lp), côté émetteur de puissance et de la bobine (Lₛ), côté récepteur de puissance, des capacités du au moins un condensateur (Cₚₛ), côté émetteur de puissance et du au moins un condensateur (Cₛₛ), côté récepteur de puissance, ainsi que de la tension en chute par l'intermédiaire du au moins un condensateur (Cₚₛ), côté émetteur de puissance, après atteinte de la valeur limite inférieure (V_{o min}) de la tension (Vₒ) de sortie, pour déterminer le facteur de couplage de la au moins une impédance (Lp), côté émetteur de puissance et de la bobine (Lₛ), côté récepteur de puissance.

16. Procédé, destiné à la transmission inductive d'énergie au moyen d'un agencement de circuit, avec un émetteur (10) de puissance et un récepteur (12) de puissance,
moyennant quoi l'émetteur (10) de puissance comprend : une entrée avec un premier (E1) et un deuxième (E2) raccord d'entrée ; un circuit en pont avec au moins un premier (T₁) et un deuxième (T₂) commutateur électronique, qui sont couplés en série entre le premier (E1) et le deuxième (E2) raccord d'entrée, moyennant quoi un premier point médian du pont (BM1) est formé entre le premier (T₁) et le deuxième (T₂) commutateur électronique ; un dispositif (14) d'excitation, destiné à exciter le premier (T₁) et le deuxième (T₂) commutateur électronique avec, respectivement, un signal d'excitation (AS1 ; AS2) et un circuit de résonance, côté émetteur de puissance, qui comprend au moins un condensateur (Cₚₛ), côté émetteur de puissance et au moins une autre impédance (Lp), côté émetteur de puissance, qui sont commutés entre eux en série, moyennant quoi le circuit de résonance est couplé entre le premier point médian du pont (BM1) et l'un des deux raccords d'entrée ;
moyennant quoi le récepteur (12) de puissance comprend : un circuit de résonance, côté récepteur de puissance, qui comprend au moins un condensateur (Cₛₛ), côté récepteur de puissance et une bobine (Lₛ), côté récepteur de puissance, moyennant quoi la bobine (Lₛ), côté récepteur de puissance, est couplée de manière inductive avec l'impédance (Lp), côté émetteur de puissance ; une sortie avec un premier (A1) et un deuxième (A2) raccord de sortie, destinés à mettre une tension (Vₒ) de sortie à la disposition d'un consommateur (R_{L}) ; un mécanisme (22) de surveillance, qui est conçu pour surveiller l'atteinte d'une valeur limite supérieure (V_{o max}) et l'atteinte d'une valeur limite inférieure (V_{o min}) de la tension (Vₒ) de sortie, moyennant quoi le mécanisme (22) de surveillance est couplé avec le mécanisme (14) d'excitation ;
**caractérisé par** les étapes suivantes :
a) conception du mécanisme (14) d'excitation, de telle sorte qu'en cas d'atteinte de la valeur limite supérieure (V_{o max}) de la tension (Vₒ) de sortie, l'excitation du premier (T₁) et du deuxième (T₂) commutateur électronique est désactivée, qu'en cas d'atteinte de la valeur limite inférieure (V_{o min}) de la tension (Vₒ) de sortie, l'excitation du premier (T₁) et du deuxième (T₂) commutateur électronique est activée et
b) après constatation de l'atteinte de la valeur limite supérieure (V_{o max}) de la tension (Vₒ) de sortie : chargement du au moins un condensateur (Cₛₛ), côté récepteur de puissance, à une tension, pouvant être prédéfinie, en particulier la tension (Vₒ) de sortie.
